# EUROPEAN PATENT APPLICATION

(11) **EP 3 076 354 A1**
(43) Date of publication of application: **05.10.2016**
(21) Application number: 16162558.7
(22) Date of filing: 29.03.2016
(51) Int. Cl.: G06Q 20/20

(54) **REDUCING THE SECURITY RISK OF RETAILERS**

(30) Priority: 31.03.2015 US 201514674071
(71) Applicant: Toshiba Global Commerce Solutions Holdings Corporation, Tokyo 141-8664 (JP)
(72) Inventor: NOONAN, William, Cary, NC North Carolina 27519 (US); ROGERS, David, Wake Forest, NC North Carolina 27587 (US)
(74) Representative: Appleyard Lees IP LLP

(57) **Abstract**

According to one embodiment of the present disclosure, a network-based computer server (20) assigns a shared cash device (14) to one or more Mobile Point of Sale (MPOS) devices (18b) and to the corresponding users of the MPOS devices (18b). The server also receives cash transaction requests from the MPOS devices (18b) indicating a request by the user to perform a cash transaction at the shared cash device (14) using the MPOS device (18b). If the MPOS device (18b) and the user of the MPOS device (18b) are authorized to perform the cash transaction, the server tracks an amount of cash that is expected to be at the shared cash device (14) and links details of the cash transaction to the MPOS device (18b) and the user of the MPOS device (18b).

## Description

### TECHNICAL FIELD

The present disclosure relates generally to Mobile Point-of-Sale (MPOS) operations in a retail environment, and more particularly, to devices and methods for maintaining accountability of the cash content of one or more shared cash devices in such MPOS environments.

### BACKGROUND

A Point of Sale (POS), also referred to as a "checkout," is a location where a transaction is completed in a retail environment. Conventionally, merchants use one or more fixed-position POS stations or "pay stations" located at or near the exit of a store, each of which may be manned by an employee that oversees customer transactions. Increasingly, however, the conventional fixed-position POS stations are being replaced by Mobile POS (MPOS) devices. Particularly, employees such as sales associates utilize dedicated mobile devices (e.g., smartphones, tablet computers, etc.) that are specially configured to complete the customer transactions. Thus, under the MPOS paradigm, fixed-position POS stations are not necessarily required.

Nevertheless, however, MPOS-based solutions for retail environments are not without their problems. For example, managing cash in MPOS solutions is a critical concern. This is because cash transactions are especially vulnerable to employee theft. With conventional operations, there are two main strategies for combatting such theft - "operator accountability" and "terminal accountability." Operator accountability maps the accountability for the cash at a fixed-position POS terminal to a single employee, while terminal accountability maps the accountability for the cash at the fixed-position POS terminal to all of the employees that use the POS terminal. Because of its one-to-one mapping approach, the operator accountability strategy is the most secure; however, the "one-to-many" terminal accountability strategies, while somewhat less secure, are more efficient.

### BRIEF DESCRIPTION OF THE DRAWINGS

Figure 1 is a block diagram illustrating an overview of a computer system configured according to one embodiment of the present disclosure.
Figure 2 is a block diagram of a shared cash device in a computer system configured according to one embodiment of the present disclosure.
Figure 3 is a flow diagram illustrating a method for associating a user and a Mobile Point-of-Service (MPOS) device to a shared cash device according to one embodiment of the present disclosure.
Figure 4 is a flow diagram illustrating a method for associating a user and a MPOS device to a shared cash device according to another embodiment of the present disclosure.
Figure 5 is a block diagram of another type of shared cash device in a computer system configured according to one embodiment of the present disclosure.
Figure 6 is a flow diagram illustrating a method for tracking the amount of cash that is currently stored in a shared cash device according to another embodiment of the present disclosure.
Figure 7 is a functional block diagram of a network server device configured to track the contents of a shared cash device according to another embodiment of the present disclosure.
Figure 8 is a functional block diagram illustrating a computer program product for tracking the contents of a shared cash device according to one embodiment of the present disclosure.
Figure 9 is a functional block diagram illustrating physical hardware units within the processing circuitry of a control server device configured according to embodiments of the present disclosure.

### DETAILED DESCRIPTION

Conventional Mobile Point-of-Sale (MPOS) solutions allow the sales associates of a given store to "roam" about the store with their MPOS devices. Such freedom allows the customers in the store to purchase a desired product or service anywhere in the store without having to stand in line at a conventional fixed pay station. In many cases, the transactions performed at the MPOS devices use a credit card or similar payment medium, and thus, may be completed anywhere in the store. In other cases, however, customers pay with cash. As MPOS device are not configured to accept/store cash, the sales associate must utilize a fixed-position pay station somewhere in the store.

As previously stated, cash transactions are especially vulnerable to employee theft in MPOS-based scenarios. Therefore, to maintain accountability of the cash, conventional MPOS solutions require that the sales associate suspend the cash transaction at the MPOS device, and then walk with the customer to a traditional fixed-position POS register (e.g., a checkout station or fixed pay station). Once at the fixed-position POS register, the sales associate or the store manager can enter the necessary codes and data into the fixed-position POS register to resume and complete the cash transaction for the customer.

These conventional solutions, however, are time consuming and require expensive hardware. Further, there are typically many more sales associates with MPOS devices than there are fixed-position POS registers. And such a "many-to-one" relationship between MPOS devices and the "shared" fixed-position pay stations can make maintaining accountability for the cash in the shared case device even more difficult.

Embodiments of the present disclosure, therefore, provide a device, a computer-implemented method, and a corresponding computer-readable storage medium for maintaining accountability of the cash contents in a shared cash device (e.g., cash drawers, cash recycling devices, etc.) within a retail environment that utilizes a MPOS solution. More specifically, a network server device identifies a plurality of shared cash devices, and then assigns the MPOS devices and their corresponding sales associates to one or more of those shared cash devices. Thereafter, whenever a sales associate attends to a cash transaction using a given MPOS device, the network server device maps the details of the cash transaction to the shared cash device and updates data related to the shared cash device with the identities of the MPOS device and the user associated with the transaction. With such information, embodiments of the present disclosure configure the network server device to monitor and track the cash contents of the shared cash device, thereby greatly reducing the possibility of employee theft.

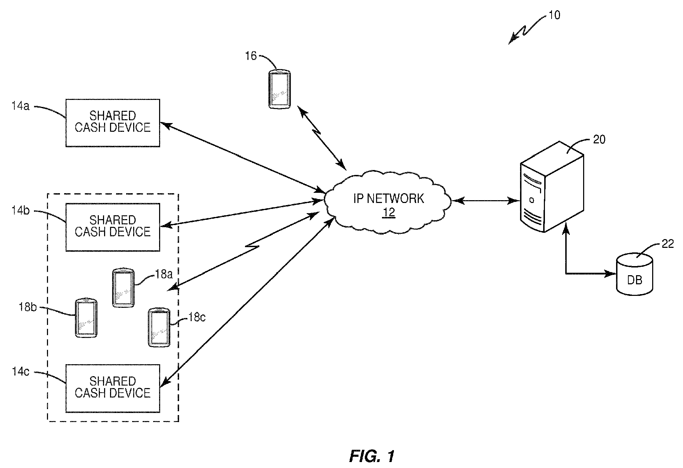

Turning now to the drawings, Figure 1 is a functional block diagram illustrating a computer system 10 configured according to one embodiment of the present disclosure. System 10, as well as some or all of the components illustrated therein, may be utilized by a merchant that employs an MPOS solution to sell products to customers, and that accepts cash and other payment vehicles such as credit cards, gift cards, and debit cards, for example, as payment for those products and services. Those of ordinary skill in the art will readily appreciate that Figure 1 does not illustrate an exhaustive list of components and that other components may or may not be configured in system 10, as needed or desired.

As seen in Figure 1, system 10 comprises an IP network 12. IP network 12 may comprise, for example, the Internet and/or any other public or private IP network that communicates data packets using any well-known protocol, such as TCP/IP, for example. In this embodiment, IP network 12 communicatively interconnects one or more shared cash devices 14a, 14b, 14c (collectively, shared cash devices 14) with a control server 20. Additionally, IP network 12 communicatively connects a plurality of MPOS devices 16, 18a, 18b, 18c, with control server 20, which in turn, is communicatively coupled to a database (DB) device 22.

In operation, customers wishing to purchase a product or service from a merchant will approach a sales associate having an MPOS device, such as MPOS device 16. Generally, the customer may have the product in hand, as well as some form of payment. The sales associate will then enter into the MPOS device 16 data associated with the purchase transaction. Such data includes, but is not limited to, information identifying the product, information about the customer, the price of the product, the payment amount, and information regarding the form of payment the customer will tender to purchase the product (e.g., credit card, gift card, cash, etc.). These transaction details and others like them are then communicated over the IP network 12 in one or more transaction messages to the control server 20. The control server 20, in turn, facilitates the transaction using data obtained from DB 22, for example.

Particularly, the control server 20 may validate the data used in the transaction (e.g., credit card validation, etc.), as well as one or both of the sales associate and the customer, based on information and data stored in DB 22. If validation is successful, the control server 20 may update data stored in the DB 22 to reflect the details of the transaction. If the transaction is successfully completed, the control server 20 may then send a positive acknowledgment message, or a negative acknowledgment message, back to the MPOS device 16 via IP network 12. A positive acknowledgment message may be used by the MPOS device 16, for example, to generate a receipt or other confirmation (e.g., email confirmation) for the customer who is purchasing the product. A negative acknowledgement, however, may cause the MPOS device 16 to cease performing the transaction.

According to embodiments of the present disclosure, each MPOS device 18a, 18b, 18c (collectively, MPOS devices 18), as well as MPOS device 16, is associated with a unique sales associate. Thus, there is a one-to-one correspondence between sales associates and MPOS devices 16, 18. Additionally, each MPOS device 16, 18 may be associated with one or more of the shared cash devices 14. In some embodiments, a single MPOS device, such as MPOS device 16, may be associated with a single shared cash device 14a, thereby providing a one-to-one relationship between the MPOS device and the shared cash device. In other cases, however, any given MPOS device, such as MPOS devices 18a, 18b, 18c, may be associated with a plurality of shared cash devices 14b, 14c, thereby providing a one-to-many relationship between MPOS devices and the shared cash devices. It should be noted, however, that within the context of the present disclosure, it is irrelevant whether there is a one-to-one or one-to-many relationship between MPOS devices 16, 18 and the shared cash devices 14.

As previously stated, a customer may wish to pay for a product in some instances using a credit card or similar payment medium. In other cases, however, the customer may wish to pay for the product with cash. It is these latter scenarios in which the embodiments of the present disclosure are particularly beneficial. Specifically, the MPOS devices 16, 18 do not comprise a cash drawer or similar structure configured to store cash. Rather, the sales associates associated with the 16, 18 must rely on the shared cash devices 14 to store that cash.

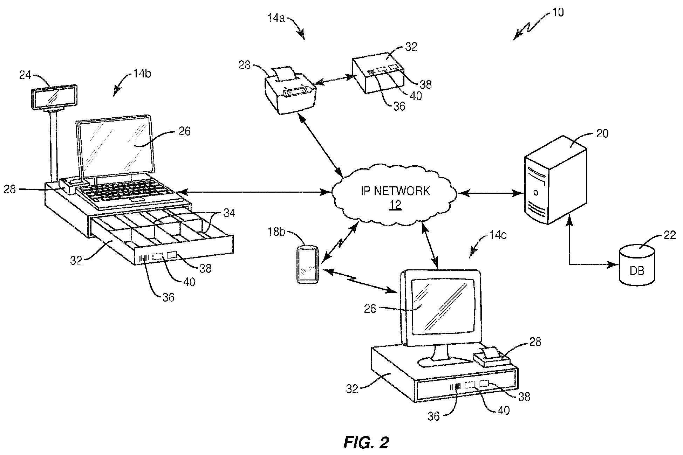

Figure 2 is a functional block diagram illustrating some exemplary shared cash devices 14a, 14b, 14c that may be employed to accept cash in such scenarios. In one embodiment, a shared cash device 14b is a POS register comprising one or more displays 24, 26, a printer 28, a keyboard 30, and a movable cash drawer 32 having a plurality of cash compartments 34. The display devices 24, 26 allow both a sales associate and a customer to view the details of a given transaction. One or both of the display devices 24, 26 may display, for example, information entered by the sales associate using the keyboard 30 and/or using an MPOS device, such as MPOS device 18b, as is hereinafter described. The printer 28 is configured to print a paper receipt to give to the customer, as previously mentioned, while the cash drawer 32 comprises one or more segregated compartments to store the various denominations of cash currency.

As previously stated, there is generally lack of control with conventional MPOS solutions over the cash that a customer may tender as part of a transaction. Moreover, that lack of control typically rests on the sales associates. Therefore, embodiments of the present disclosure address this issue by providing a unique identifier to the cash drawer 32, and then utilizing that identifier, along with an identifier for the MPOS device 18b and an identifier for the sales associate associated with MPOS device 18b, to monitor and track the cash contents of the cash drawer 32.

There are different ways in which a cash drawer 32 may be associated with a unique identifier and provided to the MPOS device 18b to facilitate a cash transaction. Figure 2, for example, illustrates three different possibilities. In a first embodiment, a identifier code 36 is printed on a label and affixed to the cash drawer 32 of the shared cash device 14b. Such identifier codes 36 may include, but are not limited to, 2D linear bar codes and matrix codes, as well as 3D identifier codes. Identifier code 36 contains information that encodes the unique identifier assigned to the shared cash device 14b. Using technology well-known in the art, a MPOS device 18b equipped with an optical scanner or camera, for example, can read the information encoded in the identifier code 36, and decode that information to obtain the identifier assigned to the cash drawer 32. Once decoded, the MPOS device 18b can send the identifier in a message to the control server 20, as described in more detail later.

In a second embodiment, a Radio Frequency ID (RFID) device 38 (or some other Near Field Communication (NFC) device) may be affixed to, or incorporated into, the cash drawer 32. The unique identifier for the cash drawer 32 is programmed into the RFID device using technology already known in the art. The MPOS device 18b would also include a corresponding RFID reader. Thus, to read the information from the RFID device 38 on cash drawer 32, the sales associate would need only to place the MPOS device 18b into close proximity of RFID device 38 (e.g., within a few millimeters of the RFID device 38). The proximity of the two devices then causes the RFID device 38 to transfer the encoded identifier to the RFID reader of MPOS device 18b using very low power. Once read, the MPOS device 18b could decode the identifier, if needed, and then send the identifier to the control server 20 in a message.

In a third embodiment, both the cash drawer 32 and the MPOS device 18b are configured to include (or be associated with) a short-range transceiver 40, such as a BLUETOOTH or WiFi transceiver, for example. In these embodiments, the short-range transceivers communicate with each other once they detect each other's' presence. Particularly, once the sales associate brings the MPOS device 18b to within a predetermined distance of shared cash device 14, the short-range transceiver 40 at the cash drawer 32 will automatically detect the short-range transceiver associated with the MPOS device 18b. So detected, the two transceivers can begin to communicate.

In one embodiment, for example, upon automatically detecting the presence of the MPOS device 18b, the short-range transceiver 40 at the cash drawer 32 may be configured to automatically transfer the identity of the cash drawer 32 to MPOS device 18b. In other embodiments, however, the MPOS device 18b may request the identifier from the short-range transceiver responsive to receiving a user command. Regardless of how the identifier is sent to and received at the MPOS device 18b, however, this embodiment of the present disclosure sends the identifier, as well as other information as needed or desired, in a message to the control server 20.

Those of ordinary skill in the art will readily appreciate that other types of shared cash devices 14 may be used in addition to, or in lieu of, shared cash device 14b in accordance with various embodiments of the present disclosure. These include, but are not limited to, devices such as shared cash devices 14a and 14c. As seen in Figure 2, shared cash device 14a comprises a network-based printer 28 configured to support an associated cash drawer 32. Similarly, shared cash device 14c comprises a computing device with a printer 28 and a cash drawer 32 that is managed remotely by another device, such as MPOS device 18b, for example. Of course, the particular devices seen in Figure 2 are merely illustrative, and other devices and configurations are also possible. However, in each embodiment, the cash drawer 32 is associated with a unique identifier that is obtained from the cash drawer 32 (e.g., via identifier code 36, RFID device 38, or transceiver 40) and sent in a message to control server 20, as previously described.

Those of ordinary skill in the art will readily appreciate that the technologies for reading and decoding the information encoded on any of the devices mentioned above (i.e., identifier code 36, RFID device 38, and short-range transmitter 40, is well-known. Thus, the particular methods and protocols by which the information is read and transferred to the MPOS device 18b are not explained in detail here.

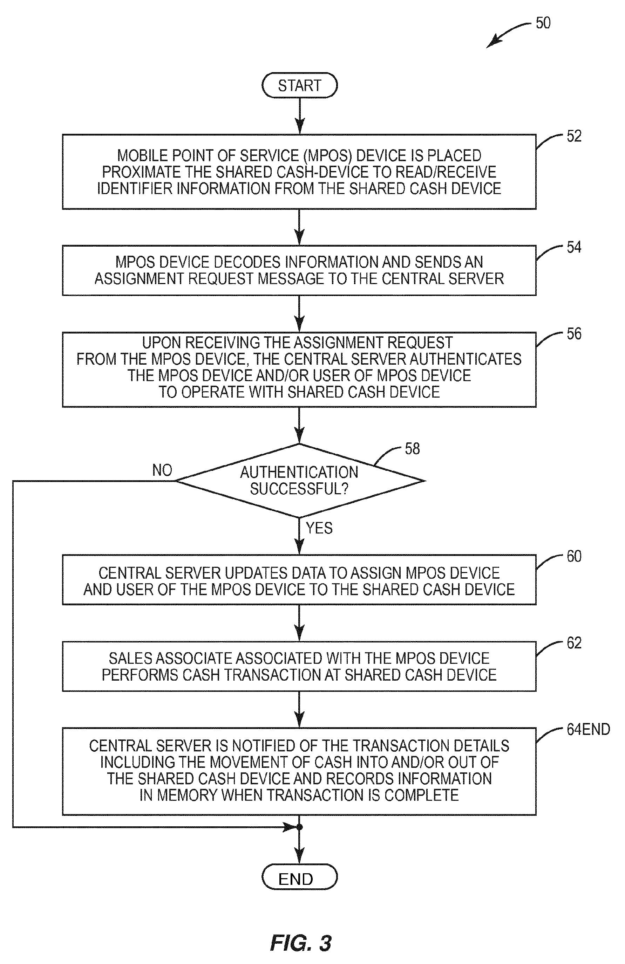

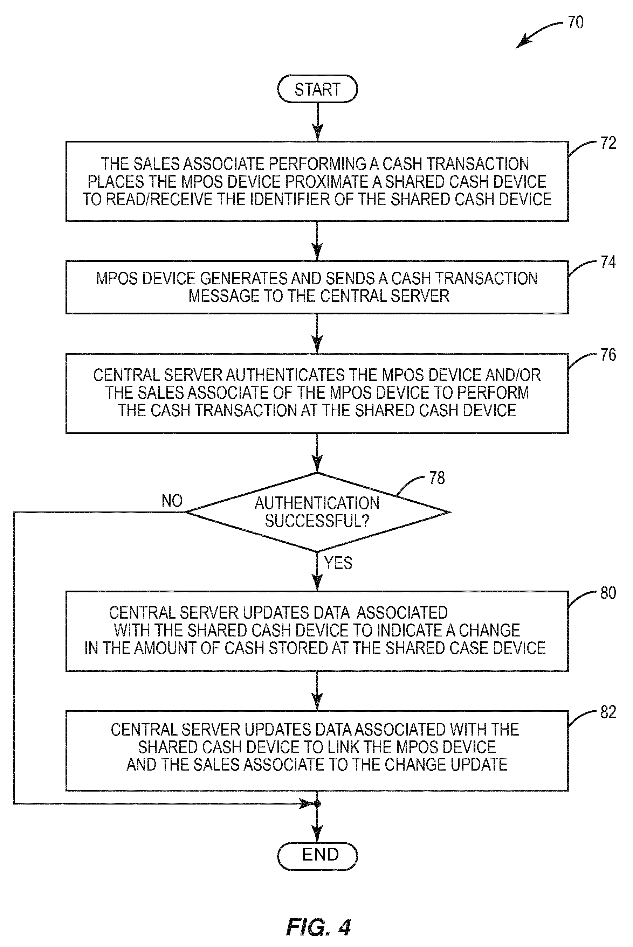

Figures 3 and 4 are flow diagrams illustrating a phased method for accounting for the cash contents of a cash drawer 32 associated with a shared cash device 14. More particularly, Figure 3 illustrates a method 50 in a first phase in which the control server 20 assigns MPOS device 18b and its corresponding sales associate to the cash drawer 32 of shared cash device 14b. Figure 4 illustrates a method 70 for a second phase in which the control server 20 updates data to monitor and track the cash contents of the cash drawer 32 of shared cash device 14b. It should be noted that while the figures are described in the context of MPOS device 18b and shared cash device 14b, the methods of this embodiment may be utilized for any MPOS device and shared cash device.

As seen in Figure 3, method assumes that the cash drawer 32 of shared cash device 14b is installed and assigned a unique identifier that is already stored in DB 22. In method 50, the sales associate associated with MPOS device 18b would first place the MPOS device 18b in close proximity to the cash drawer 32 to read and extract the identifier assigned to the cash drawer 32 (box 52). As previously described, the MPOS device 18b may scan a identifier code 36 affixed to the cash drawer 32 to read the identifier, or receive the identifier in information transmitted by the RFID device 38 or the short-range transceiver 40. Upon receipt, the MPOS device 18b would decode the information to extract the identifier, if necessary, and generates an assignment request message to send to the control server 20 via IP network 12 (box 54). In this embodiment, the MPOS device 18b generates the assignment request message to include the identifier received from the cash drawer 32, a unique identifier assigned to the MPOS device 18b, and a unique identifier associated with the sales associate that is using the MPOS device 18b. Upon receiving the request message, the control server 20 extracts the identifiers from the assignment request message and uses the identifiers to authenticate the one or both of the MPOS device 18b and the sales associate (box 56).

Authentication may be performed in any manner known in the art. For example, in one embodiment, the control server 20 checks data stored in DB 22 to determine if one or more of the identifiers exist in a record. Such records may be pre-provisioned, for example, and identify which sales associates and MPOS devices 16, 18, are valid for use with which cash drawers 32. If the identifier information received in the assignment request message matches the information stored in DB 22, then authentication may be considered successful.

Additionally, or alternatively, the authentication process may be enhanced or augmented with communications between the control server 20 and the sales associate using the MPOS device 18b. By way of example only, the control server 20 may send a message to the MPOS device 18b in response to receiving the assignment request message to prompt the user to enter a Personal Identification Number (PIN), a password, or to verify a CAPTCHA provided by the control server 20, or the like. Once entered, the information is passed back to the control server 20 for verification, and if verified, authentication is considered successful.

If authentication is successful (box 58), the control server 20 will proceed with associating the MPOS device 18b with the sales associate using the MPOS device 18b to the cash drawer 32 identified in the assignment request message (box 60). The control server 20 will then await further messages from the MPOS device 18b indicating a cash transaction being performed by the MPOS device 18b. Particularly, as described in more detail in Figure 4, the sales associate will perform the cash transaction at the shared cash device (box 62). The control server 20 is then notified of the transaction details, including the movement of cash into and out of the shared cash device, and records those details in memory. However, if authentication is not successful (box 58), the control server 20 will not complete the requested assignment and the method 50 ends. In some embodiments, the control server 20 may return a positive or negative response message to the requesting MPOS device 18b indicating whether authentication was successful or unsuccessful.

Figure 4 is a flow diagram illustrating method 70 for tracking the contents of cash drawer 32 of shared cash device 14b. Method 70 is performed at the control server 20, and is performed responsive to receiving an indication from the MPOS device 18b that a cash transaction is being performed by MPOS device 18b.

Method 70 begins with the sales associate associated with MPOS device 18b performing a cash transaction for a customer. Particularly, as seen in Figure 4, the sales associate would first place the MPOS device 18b in close proximity to the cash drawer 32 so that the MPOS device 18b could read and extract the identifier that is associated with the cash drawer 32 (box 72). As previously described, the identifier may be read and decoded from identifier code 36, RFID device 38, short-range transceiver 40, or the like. The MPOS device 18b would then generate and send a transaction message to the control server 20 (box 74). The transaction message indicates a cash transaction to control server 20 and may comprise any information needed or desired. However, in one embodiment, the transaction message comprises data that includes, but is not limited to, the identity of the product or service being purchased by a customer, the price of the product or service, the unique identifier of the cash drawer 32, the unique identity of the MPOS device 18b, and the unique identity of the sales associate operating the MPOS device 18b.

Upon receipt of the transaction data, control server 20 authenticates the MPOS device 18b and/or the sales associate operating the MPOS device 18b (box 76). Such authentication helps to ensure that the sales associate and the MPOS device 18b are valid to perform the cash transaction with the shared cash device 14 identified in the transaction message. If authentication fails (box 78), the process ends and the transaction is denied by control server 20. The control server may, in some cases, send a response message to the MPOS device 18b indicating the transaction denial. If, however, the authentication is successful (box 78), control server 20 updates the data associated with the shared cash device 14 to indicate the change in the amount of cash stored in the cash drawer 32 of shared cash device 14b (box 80). Additionally, control server 20 updates the data that is associated with the cash drawer 32 of shared cash device 14b to link the cash transaction, as well as the details of the cash transaction, to MPOS device 18b and sales associate that performed the cash transaction (box 82). As above, in some embodiments, the control server 20 may return a response message to the requesting MPOS device 18b indicating that the authentication was successful, and that the transaction request was authorized.

Updating this information allows the control server 20 to consistently and accurately monitor the cash contents of the cash drawer 32 in the shared cash device 14b. Further, the updates allow control server 20 to accurately track the changes to the cash content in that cash drawer 32 based on the sales associate and the MPOS device 18b the sales associate used to perform the cash transaction. The data may be used, for example, to generate a transaction log or other type of report indicating the details of the cash transactions. Additionally, due to the one-to-many relationship between the cash drawer 32 and the MPOIS devices 18, control server 20 is configured to more accurately manage the cash content of cash drawer 32. Further, based on such data, the control server 20 is more capable of accounting for the cash contents of the cash drawer 32 to one or more specific sales associates and their respective MPOS devices.

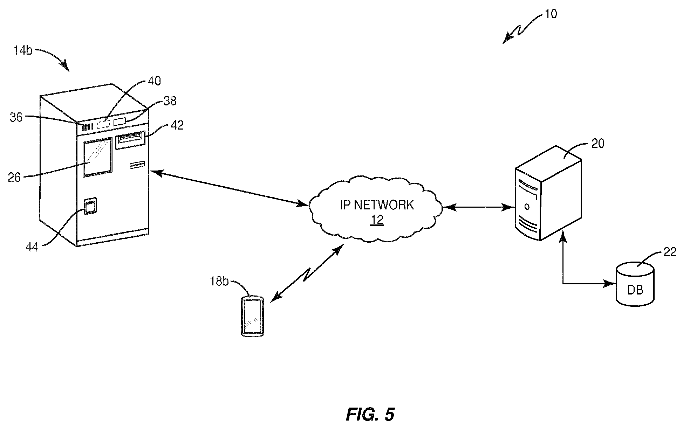

The previous embodiment illustrated the shared cash device 14b as being a shared POS register. However, those of ordinary skill in the art will readily appreciate that the present disclosure is not so limited. In another aspect of the present disclosure, seen in Figure 5, the shared cash device 14b comprises a device commonly referred to as a "cash recycler." A cash recycler, which may also be shared among sales associates, is a device that accepts and stores an amount of cash. The cash typically includes paper money (e.g., $20 bills), but may also include coins. During operations, customers may insert a payment medium such as cash money, debit cards, credit cards, and the like, into a slot on the cash recycler. In return, the cash recycler produces an amount of cash to the customer. Thus, the same money that is fed into a cash recycler by one customer can be dispensed by the cash recycler to a subsequent customer, for example as change, or as cash based on a debit-card or credit card transaction, or as cash-back on a debit-card purchase. Some typical examples of a cash recycler include, but are not limited to, hardware devices such as Automated Teller Machines (ATMs), self-checkout stations, change machines, and POS devices at fixed-position checkout stations.

As seen in Figure 5, the shared cash device 14b (i.e., the cash recycler) is an enclosed structure that may comprise some of the same components of a POS register. Such components include, for example, a display 26 that displays instructions and other data to a user to facilitate a financial transaction between the user and the shared cash device 14b. In addition, however, the shared cash device 14b of Figure 5 also includes a cash acceptance component 42 and a cash output drawer 44. The cash acceptance component 42 comprises, as is known in the art, a slot sized to receive a bill, and a motorized component that draws the bill into the shared cash device 14b upon detecting that the user has placed the bill into the slot, and a coin acceptor device. Component 42 also comprises the circuitry required to optically scan a bill being inserted to the slot ensure that the bill is not counterfeit. The cash output drawer 44 is an area to which the shared cash device 14b of Figure 5 dispenses the money that is stored therein.

In one embodiment of the disclosure, a sales associate associated with MPOS device 18b may assist a customer attempting to perform a cash transaction for a selected product at the cash recycler using the same steps as those described above with respect to method 50 and method 70. That is, a sales associate would first place the MPOS device 18b in close proximity to the shared cash device 14b in Figure 5 to read and decode the unique identifier assigned to the shared cash device 14b. As above, the MPOS device 18b may obtain the identifier from the identifier code 36, the RFID device 38, or the short-range transceiver 40 associated with the shared cash device 14b. The control server 20, upon receiving the information from the MPOS device 18b, would authenticate the MPOS device 18b and/or the user, as previously described, and assign the MPOS device 18b and the sales associate to the identified shared cash device 14b. Thereafter, to facilitate cash transactions occurring at the shared cash device 14b, the MPOS device 18b would again read and decode the unique identifier assigned to the shared cash device14b. MPOS device 18b would then send the cash transaction message to the control server 20, which would authenticate the MPOS device 18b and/or the sales associate, and if authentication is successful, update the data stored in DB 22 to track the cash contents of the shared cash device 14b, as previously described.

The previously embodiments identified cash transactions as being part of a customer purchase. However, the present embodiments are not so limited. The procedures stated above for performing a cash transaction that facilitates the purchase of a product or service may also be utilized for tracking and monitoring cash refunds, as well as other types of cash transactions performed at shared cash device 14b. By way of example only, managers or other authorized personnel may, from time-to-time, deposit an amount of cash into shared cash device 14b. Such deposits are commonly referred to as "cash loans," and can occur when the amount of cash in the shared cash device 14b falls below a first predetermined threshold value. Similarly, the procedures detailed above may also be utilized to perform "cash pickups" in which authorized personnel retrieve an amount of cash from the shared cash device 14b. Such cash pickups may occur, for example, if shared cash device 14b is deemed to contain an amount of cash that exceeds a second predetermined threshold value.

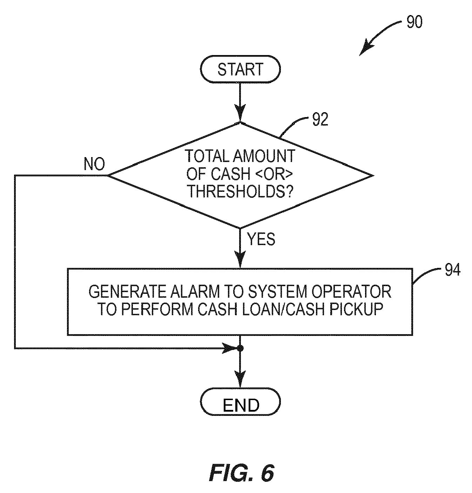

Whether the shared cash device 14b contains too much or too little cash can be determined using the data received from the MPOS devices 16, 18 at the control server 20. By way of example, a system operator may set a lower limit threshold value that identifies a minimum total amount of cash that should remain in the shared cash device 14b at all times. Similarly, the system operator may also define an upper limit threshold to define the maximum total amount of cash that should be in the shared cash device 14b. As part of processing the incoming cash transaction messages from MPOS device 18b, the control server 20 may compute an amount of cash that is expected to be at the shared cash device 14b and check the expected amount against these threshold values. For example, as seen in method 90 of Figure 6, if either the lower limit or upper limit threshold value is exceeded (box 92), the control server 20 may generate and send an alert message to the system operator indicating the current amount of cash in the shared cash device 14b so that the system operator can perform a "cash loan" or a "cash pickup" (box 94).

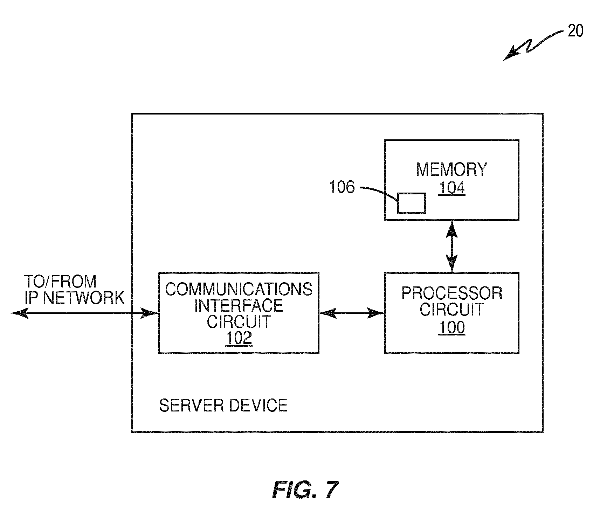

Figure 7 is a functional block diagram illustrating some of the components of control server 20. Those of ordinary skill in the art will readily appreciate that the components seen herein are for illustrative purposes only and that control server 20 may comprise other components, as needed or desired.

As seen in Figure 7, network server device 20 comprises a processor circuit 100, a communications interface circuit 102, and a memory 104 that stores a control application 106. Processor circuit 100 may be implemented by one or more microprocessors, hardware, firmware, or a combination thereof. Processor circuit 100 generally controls the operation and functions of control server 20, which may include, but are not limited to, sending and receiving messages via IP network 12, such as the assignment request and cash transaction messages described above, authenticating the MPOS devices 16, 18 and/or the sales associate(s) using the information contained in those messages, assigning the MPOS devices 16, 18 and the sales associate(s) to one or more shared cash devices 14, and updating the data associated with a given shared cash device 14 based on the information in the messages to track the cash contents of the cash drawer 32 assigned to the share cash device 14. Additionally, processing circuit 100 is configured to perform the processing required to determine whether a system operator or other authorized personnel should perform a cash loan or a cash pickup, as previously described.

The communications interface 102 comprises a transmitter and receiver interface that enables the processor circuit 100 to communicate data and signals with the MPOS devices 16, 18, as well as the shared cash devices 14, via network 12. The communications interface 102 may effect such communications using one or more communication protocols known in the art or that may be developed, such as IMS/SIP, Diameter, HTTP, RTP, RTCP, HTTPs, SRTP, CAP, DCCP, Ethernet, TCP/IP, SONET, ATM, or the like. Further, communication interface 82 may implement receiver and transmitter functionality appropriate to the communication network links (e.g., optical, electrical, and the like), and the transmitter and receiver functions may share circuit components and/or software, or alternatively may be implemented separately.

In one embodiment, the communications interface 102 comprises an ETHERNET card. In wireless embodiments, however, communications interface 102 comprises a wireless interface transceiver that is configured to connect to the MPOS devices 16, 18 and shared cash devices 14 via network 12. For example, the communications interface 102 may be configured to communicate with MPOS devices 16, 18 and shared cash devices 14 via network 12 across an air interface utilizing any well-known protocol or that may be developed. Some exemplary protocols include, but are not limited to, IEEE 802.xx, CDMA, WCDMA, GSM, EDGE, LTE, UTRAN, E-UTRAN, WiMax, and the like.

The memory circuit 104 may comprise any non-transitory, solid state memory or computer readable media known in the art. Suitable examples of such media include, but are not limited to, ROM, DRAM, Flash, or a device capable of reading computer-readable media, such as optical or magnetic media. Memory circuit 104 may be part of the same device as processor circuit 100, or it may be separate from the device. Regardless of its configuration, however, the memory circuit 104 stores a control application 106 having logic and instructions that, when executed by the processor circuit 100, controls the control server 20 to perform the functions previously described.

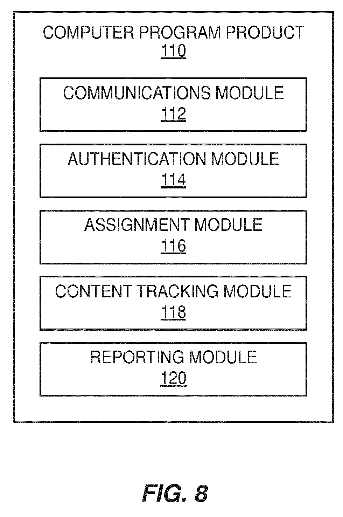

Another aspect of the disclosure, seen in Figure 8, comprises a computer program product 110. The computer program product 110 comprises program code that is executable by a processing circuit of a computing device. When executed, the computer program code enables a retailer or merchant, for example, to accurately track the cash contents of a shared cash device 14, such as a POS register or a cash recycler. The computer program product 110 may, for example, be embodied in a non-transitory, computer-readable medium, such as the memory circuit 104 of control server 20, or a removable memory device, such as a thumb drive or disc, for example.

As seen in Figure 8, the computer program product 110 comprises at least one of a communications module 112, an authentication module 114, an assignment module 116, a content tracking module 118, and a reporting module 120. Each of these modules is executed by the processing circuit 100 of network server device 20.

The communications module 112 comprises computer program code that when executed by processing circuit 100, controls the control server 20 communications with each of the MPOS devices 16, 18, as well as the shared cash devices 14. Such communications are performed via IP network 12 using the well-known TCP/IP protocol, for example, and include the communication of messages, such as the assignment messages and the cash transaction messages, as previously described. For example, via the communications module 112, the network server device 20 receives the various request messages and data from the MPOS devices 16, 18, and further, sends a variety of response messages to the MPOS devices 16, 18 indicating, for example, whether the MPOS device 16, 18 and the corresponding sales associate are authorized to perform a requested cash transaction at the shared cash device14.

The authentication module 114 comprises program code that when executed by the processing circuit 100 controls the processing circuit 100 to verify the identities of the shared cash devices 14, the MPOS devices 16, 18, and the sales associates using the MPOS devices 16, 18. Such verification may comprise controlling the processing circuit 100 to obtain and process appropriate pre-defined authentication data from a data store, such as DB 22, for example, and/or communicate prompts to the sales associate and MPOS devices 16, 18 for additional security information. Such security information is generally provided by the sales associate and/or the MPOS devices 16, 18 in response to a request message from the authentication module 114, and may include, but is not limited to, a PIN, a password, or other similar information. The code and instructions that comprise the authentication module 114 may be invoked responsive to the communications module 112 receiving one or both of the authentication request messages and the cash transaction messages from MPOS devices 16, 18.

The assignment module 116 comprises computer program code that when executed by the processing circuit 100, causes the processing circuit 100 to assign the MPOS devices 16, 18, and their associated sales associates, to the shared cash devices 14. By way of example, the assignment module 116 may utilize the unique identities of the cash drawers 32, the MPOS devices 16, 18, and the sales associates to generate corresponding records that link the MPOS devices 16, 18, and their corresponding sales associates to the cash drawers 32. In at least one embodiment, the assignment module 116 performs its functions responsive to a success or fail signal received from the authentication module 114. That is, the processing circuit 100 may only invoke the code and instructions that comprise the assignment module 116 if the authentication module 114 indicates a successful authentication procedure to the processing circuit 100.

The content tracking module 118 comprises computer program code that when executed by the processing circuit 100 in control server 20, controls the processing circuit 100 to update the records in DB 22 to reflect the most current cash contents of a given shared cash device 14. Particularly, based on information received in a cash transaction message from an MPOS device 16, 18, and on a success or fail signal provided by the authentication module 114, the content tracking module 118 can control the processing circuit 100 on control server 20 to generate update commands and messages reflecting the changes that are made to the cash contents of a given shared cash device, and to communicate those commands and messages to the DB 22. Additionally, the content tracking module 118 also contains the code and instructions necessary to control processing circuit 100 to determine whether the cash contents of the shared cash device exceeds, or falls below, any of the predefined threshold values. For example, as stated above, such thresholds may define an upper and a lower limit on the total amount of cash that may be in the shared cash device 14. In embodiments of the present disclosure, the content tracking module 118 performs its functions using the transaction data received from the MPOS devices 16, 18 in the cash transaction messages.

The reporting module 120 comprises computer program code that when executed by the processing circuit 100 in control server 20, controls the processing circuit 100 to generate reports based on the data reflecting the cash contents of the shared cash device 14. Such reports may be generated automatically for output to a user, or may be generated in response to a user request. In some embodiments, the reporting module 120 also comprises the code and instructions to control the processing circuit 80 to generate the alarms indicating that a cash loan or a cash pickup should be performed.

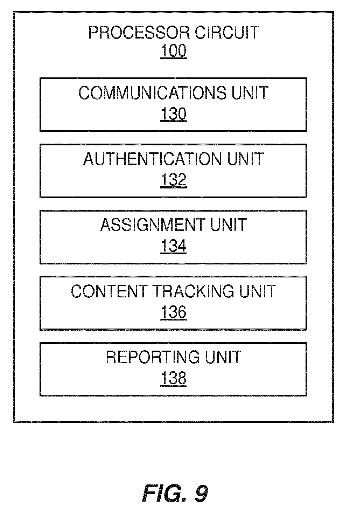

Figure 9 is a block diagram illustrating some exemplary hardware units in a processor circuit 100 configured to perform the embodiments of the present disclosure. As seen in Figure 9, processor circuit 100 comprises at least one of a communications unit 130, an authentication unit 132, an assignment unit 134, a content tracking unit 136, and a reporting unit 138.

The communications unit 130 controls the control server 20 communications with each of the MPOS devices 16, 18, as well as the shared cash devices 14. Such communications are performed via IP network 12 using the well-known TCP/IP protocol, for example, and include the communication of messages, such as the assignment messages and the cash transaction messages, as previously described. For example, via the communications unit 130, the control server 20 receives the various request messages and data from the MPOS devices 16, 18, and further, sends a variety of response messages to the MPOS devices 16, 18 indicating, for example, whether the MPOS device 16, 18 and the corresponding sales associate are authorized to perform a requested cash transaction at the shared cash device14.

The authentication unit 132 verifies the identities of the shared cash devices 14, the MPOS devices 16, 18, and the sales associates using the MPOS devices 16, 18. Such verification may comprise obtaining and processing appropriate pre-defined authentication data from a data store, such as DB 22, for example, and/or communicating prompts to the sales associate and MPOS devices 16, 18 for additional security information. Such security information is generally provided by the sales associate and/or the MPOS devices 16, 18 in response to a request message from the authentication unit 132, and may include, but is not limited to, a PIN, a password, or other similar information. The functions of authentication unit 132 may be performed responsive to the communications unit 130 receiving one or both of the authentication request messages and the cash transaction messages from MPOS devices 16, 18.

The assignment unit 134 assigns the MPOS devices 16, 18, and their associated sales associates, to the shared cash devices 14. By way of example, the assignment unit 134 may utilize the unique identities of the cash drawers 32, the MPOS devices 16, 18, and the sales associates to generate corresponding records that link the MPOS devices 16, 18, and their corresponding sales associates to the cash drawers 32. In at least one embodiment, the assignment unit 134 performs its functions responsive to a success or fail signal received from the authentication unit 134.

The content tracking unit 136 controls the processing circuit 100 to update the records in DB 22 to reflect the most current cash contents of a given shared cash device 14. Particularly, based on information received in a cash transaction message from an MPOS device 16, 18, and on a success or fail signal provided by the authentication unit 132, the content tracking unit 136 controls control server 20 to generate update commands and messages reflecting the changes that are made to the cash contents of a given shared cash device, and to communicate those commands and messages to the DB 22. Additionally, the content tracking unit 136 determines whether the cash contents of the shared cash device exceeds, or falls below, any of the predefined threshold values. For example, as stated above, such thresholds may define an upper and a lower limit on the total amount of cash that may be in the shared cash device 14. In embodiments of the present disclosure, the content tracking module 118 performs its functions based on the transaction data received from the MPOS devices 16, 18 in the cash transaction messages.

The reporting unit 120 controls the processing circuit 100 to generate reports based on the data reflecting the cash contents of the shared cash device 14. Such reports may be generated automatically for output to a user, or may be generated in response to a user request. In some embodiments, the reporting module 120 also generates the alarms indicating that a cash loan or a cash pickup should be performed.

The embodiments of the present disclosure may, of course, be carried out in other ways than those specifically set forth herein without departing from essential characteristics of the disclosure. Therefore, the present embodiments are to be considered in all respects as illustrative and not restrictive, and all changes coming within the meaning and equivalency range of the appended claims are intended to be embraced therein.

## Claims

1. A computer-implemented method (50, 70), the method comprising:
receiving (74) a transaction request message via a communications network, wherein the transaction request message comprises transaction data representing a requested cash transaction to be performed at a shared cash device (14) comprising cash content, the transaction data comprising:
a Mobile Point of Sale (MPOS) ID identifying an MPOS device (18b) being used to perform the cash transaction at the shared cash device (14);
a user ID identifying a user operating the MPOS device (18b) to perform the cash transaction at the shared cash device (14); and
a device ID identifying the shared cash device (14);
determining (76) whether the user and the MPOS device (18b) are authorized to perform the cash transaction at the shared cash device (14) based on the transaction data; and
if the user and the MPOS device (18b) are authorized (78) to perform the cash transaction at the shared cash device (14):
sending a transaction response message to the MPOS device (18b) authorizing the user and the MPOS device (18b) to perform the cash transaction at the shared cash device (14); and
accounting for the cash content of the shared cash device (14) based on the transaction data received in the transaction request message.

2. The computer-implemented method (50, 70) of claim 1 wherein if the user and the MPOS device (18b) are not authorized (78) to perform the cash transaction at the shared cash device (14), the method further comprises sending a transaction response message to the MPOS device (18b) denying authorization for the user and the MPOS device (18b) to perform the cash transaction at the shared cash device (14).

3. The computer-implemented method (50, 70) of claim 1 further comprising assigning, by a network-based server device, the shared cash device (14) to the user and the MPOS device (18b).

4. The computer-implemented method (50, 70) of claim 3 wherein assigning the shared cash device (14) to the user and the MPOS device (18b) comprises:
receiving (56) an assignment request message from the MPOS device (18b), wherein the assignment request message comprises the MPOS ID, the user ID, and the device ID;
determining (58) whether the MPOS device (18b) and the user of the MPOS device (18b) are authorized to access the shared cash device (14) based on the MPOS ID, the user ID, and the device ID; and
updating (60) an assignment record for the shared cash device (14) to indicate that the user and the MPOS device (18b) are authorized to access the shared cash device (14) to perform cash transactions.

5. The computer-implemented method (50, 70) of claim 4 wherein determining (58) whether the user and the MPOS device (18b) are authorized to perform the cash transaction at the shared cash device (14) comprises verifying that the assignment record for the shared cash device(14) identifies the user and the MPOS device (18b) that sent the transaction request message.

6. The computer-implemented method (50, 70) of claim 1 wherein the transaction data further comprises a transaction type indicating a type of cash transaction to be performed at the shared cash device (14), wherein the transaction type comprises one of a cash loan, a cash pickup, a cash purchase, and a cash refund.

7. The computer-implemented method (50, 70) of claim 1 wherein accounting for the cash content of the shared cash device (14) comprises:
updating (82) a data record associated with the shared cash device (14) to link details of the cash transaction performed at the shared cash device (14) with the MPOS device and the user of the MPOS device (18b);
computing an amount of cash expected to be at the shared cash device (14) based on information included in the transaction data; and
updating (80) the data record based on the information to indicate the computed amount of cash.

8. A computing device (20) comprising:
a communications interface circuit (102) configured to receive a transaction request message from a Mobile Point of Sale (MPOS) device (18b), wherein the transaction request message comprises transaction data representing a requested cash transaction to be performed at a shared cash device (14) comprising cash content, the transaction data comprising:
an MPOS ID identifying the MPOS device (18b);
a user ID identifying a user operating the MPOS device (18b) to perform the cash transaction at the shared cash device (14); and
a device ID identifying the shared cash device (14); and
a processor circuit (100) configured to:
determine (76) whether the user and the MPOS device (18b) are authorized to perform the cash transaction at the shared cash device (14) based on the transaction data; and
if the user and the MPOS device (18b) are authorized (78) to perform the cash transaction at the shared cash device (14):
authorize the user and the MPOS device (18b) to perform the cash transaction at the shared cash device (14); and
account for the cash content of the shared cash device (14) based on the transaction data received in the transaction request message.

9. The computing device (20) of claim 8 wherein the processing circuit (100) is further configured to deny authorization to the user and the MPOS device (18b) to perform the cash transaction if the user and the MPOS device (18b) are not authorized to perform the cash transaction at the shared cash device (14).

10. The computing device of claim 8 wherein the processing circuit (100) is further configured to assign the shared cash device (14) to the user and the MPOS device (18b).

11. The computing device of claim 10 wherein the processing circuit (100) is further configured to:
receive (56) an assignment request message from the MPOS device (18b), wherein the assignment request message comprises the MPOS ID, the user ID, and the device ID;
determine (58) whether the MPOS device (18b) and the user of the MPOS device (18b) are authorized to access the shared cash device (14) based on the MPOS ID, the user ID, and the device ID, wherein to determine whether the user and the MPOS device (18b) are authorized to perform the cash transaction at the shared cash device (14), the processing circuit (100) is further configured to verify that the assignment record for the shared cash device (14) is associated with to the user and the MPOS device (18b) that sent the transaction request message.; and
update (60) an assignment record for the shared cash device (14) to indicate that the user and the MPOS device (18b) are authorized to access the shared cash device (14) to perform cash transactions.

12. The computing device (20) of claim 8 wherein the transaction data further comprises a transaction type that indicates a type of cash transaction to be performed at the shared cash device (14), wherein the transaction type comprises one of a cash loan, a cash pickup, a cash purchase, and a cash refund.

13. The computing device (20) of claim 8 wherein to account for the cash content of the shared cash device (14), the processing circuit (100) is further configured to update (82) data associated with the shared cash device (14) to associate the cash transaction with the MPOS device and the user of the MPOS device (18b).

14. The computing device (20) of claim 13 wherein to account for the cash content of the shared cash device (14), the processing circuit is further configured to:
compute an amount of cash expected to be at the shared cash device (14) based on information included in the transaction data; and
update (80) the data record based on the information to indicate the computed amount of cash.

15. A non-transitory computer-readable storage medium (110) comprising executable program code (112, 114, 116, 118, 120) stored thereon that, when executed by a processing circuit (100) of a computing device (20), controls the computing device (20) to:
store information in a memory circuit (104) assigning a shared cash device (14) with both a Mobile Point of Sale (MPOS) device (18b) and a user of the MPOS device (18b), wherein the shared cash device (14) comprises an amount of cash;
receive (74) a request from the MPOS device (18b) to perform a cash transaction at the shared cash device (14);
authorize (76) the MPOS device (18b) and the user of the MPOS device (18b) to perform the cash transaction at the shared cash device (14);
compute an expected amount of cash for the shared cash device (14);
associate (60) the cash transaction and the expected amount of cash for the shared cash device (14) with the MPOS device (18b) and the user of the MPOS device (18b); and
send a response message to the MPOS device (18b) indicating authorization for the user to use the MPOS device (18b) to perform the cash transaction at the shared cash device (14).
